# EUROPEAN PATENT APPLICATION

(11) **EP 4 219 131 A1**
(43) Date of publication of application: **02.08.2023**
(21) Application number: 23160606.2
(22) Date of filing: 21.12.2018
(51) Int. Cl.: B29C 64/106, B33Y 10/00, B33Y 70/00, B33Y 80/00, B29K 23/00

(54) **HIGH PERFORMANCE POLYOLEFIN FOR MATERIAL EXTRUSION**

(30) Priority: 26.12.2017 US 201762610416 P
(62) Divisional of application: 18839990.1
(71) Applicant: Braskem America, Inc., Pittsburgh, Pennsylvania 15219 (US)
(72) Inventor: BERNARDI, Alessandro, Houston (US); DA LUZ, Alexandre Di Pintor, Camaçari (BR); DE AZEREDO, Ana Paula, Camaçari (BR); ITO, Leonardo Batista, São Paulo (BR); SOARES, Juliana Breda, São Paulo (BR); SING, Michelle K., Stoneham (US)
(74) Representative: Osha Liang

(57) **Abstract**

A method of manufacturing an article using an additive manufacturing technique may include melting a polymer composition including at least one of polyethylene and a random polypropylene copolymer; activating the polymer composition with one or more activating agents; and depositing the molten polymer composition to manufacture the article. An article may include a plurality of printed layers of a polyolefin composition including at least one of polyethylene and a random polypropylene copolymer, wherein the polyolefin composition is prepared from the deposition of an activated polyolefin composition, wherein the polyolefin composition is activated by one or more activating agents.

## Description

### BACKGROUND

Rapid prototyping or rapid manufacturing processes are manufacturing processes which aim to convert available three-dimensional CAD data directly and rapidly into workpieces, as far as possible without manual intervention or use of molds. In rapid prototyping, construction of the part or assembly is usually done in an additive, layer-by-layer fashion. Those techniques that involve fabricating parts or assemblies in an additive or layer-by-layer fashion are termed "additive manufacturing" (AM), as opposed to traditional manufacturing methods which are mostly reductive in nature. Additive manufacturing is commonly referred to by the general public as "3D printing".

There are currently several basic AM technologies: material extrusion, material jetting, binder jetting, material jetting, vat photopolymerization, sheet lamination, powder bed fusion, and directed energy deposition. The most widely used of these AM technologies is based on material extrusion. While some variations exist, this technology generally involves feeding a thermoplastic polymer in the form of a continuous filament into a heated nozzle, where the thermoplastic filament becomes a viscous melt and can be therefore extruded. The 3-dimensional motion of the nozzle or the extruder assembly is precisely controlled by step motors and computer aided manufacturing (CAM) software. The first layer of the object is deposited on a build substrate, whereas additional layers are sequentially deposited and fused (or partially fused) to the previous layer by solidification due to a drop in temperature. The process continues until a 3-dimensional part is fully constructed and any temporary support materials are removed.

Common types of material extrusion include fused deposition modeling (FDM) and fused filament fabrication (FFF). There are several thermoplastic polymers that are currently being used in material extrusion processes such as acrylonitrile-butadiene-styrene (ABS), poly(lactic acid) (PLA), polycarbonate (PC), polystyrene (PS), high impact polystyrene (HIPS), polycaprolactone (PCL), and polyamide as well as some other polymeric materials.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, embodiments disclosed herein relate to a method of manufacturing an article using an additive manufacturing technique that includes melting a polymer composition; activating the polymer composition with one or more activating agents; and depositing the molten polymer composition to manufacture the article.

In another aspect, embodiments disclosed herein relate to an article prepared by melting a polymer composition; activating the polymer composition with one or more activating agents; and depositing the molten polymer composition to manufacture the article.

In yet another aspect, embodiments disclosed herein relate to an article that includes a plurality of printed layers of a polyolefin composition, wherein the polyolefin composition is prepared from the deposition of an activated polyolefin composition, wherein the polyolefin composition is activated by one or more activating agents.

Other aspects and advantages of the claimed subject matter will be apparent from the following description and the appended claims.

### BRIEF DESCRIPTION OF DRAWINGS

FIG. 1 is a graphical representation showing complex viscosity as a function of angular frequency for polymer samples in accordance with embodiments of the present disclosure.
FIG. 2 is a graphical representation showing melt strength as a function of draw rate for polymer samples in accordance with embodiments of the present disclosure.
FIG. 3 is a graphical representation of the results of size exclusion chromatography (SEC) showing the weight fraction as a function of the log of the molecular weight for polymer samples in accordance with embodiments of the present disclosure.
FIGS. 4-7 are microscopy images of 3D printed polymers in accordance with embodiments of the present disclosure.
FIGS. 8-10 are graphical representations of physical properties of 3D printed polymers in accordance with the present disclosure.

### DETAILED DESCRIPTION

In one aspect, embodiments disclosed herein relate to polymer compositions with particular application to additive manufacturing applications, in particular those using material extrusion to deposit a molten polymer. Polymer compositions in accordance with the present disclosure may include a polymer component and an activating agent that initiates the formation of branches and crosslinks that enhance mechanical properties of the polymer component during article manufacture. Methods in accordance with the present disclosure may use activating agents to change the surface energy of the polymers and modify the adhesion to different substrates and between printed layers, and may expand the field of polymers that may be employed in material extrusion processes.

Material Extrusion (ME) is a variant of additive manufacturing that selectively extrudes a polymer melt through a nozzle or other orifice, and deposits the polymer onto a substrate in sequential layers to generate three dimensional structures. An example of a common ME process is fused deposition modeling (FDM) in which an extrusion head heats a plastic filament, producing a polymer melt that is extruded through a nozzle onto a printing substrate in a controlled pattern. Other ME processes include freeform printing in which a polymer resin is melted and deposited in droplet form (rather than a string of molten polymer) by a nozzle onto a printing substrate.

In general, higher molecular weight (MW) polyolefins are often preferred for product manufacture in many applications because of their enhanced mechanical properties and durability when compared to low MW polyolefins. However, in additive manufacturing processes, higher MW polyolefins often exhibit higher viscosity under melt conditions, which may negatively impact extrusion performance due to the poor polymer chain diffusion and inter-layer adhesion. As a result, printed articles prepared from high MW polyolefins often exhibit less mechanical resistance when compared to injection molded articles of the same material. On the other hand, low MW polymers exhibit good coalescence and chain diffusion properties during additive manufacturing, but create parts of low mechanical performance and with higher occurrence of shrinkage in the final geometry caused by the crystallization of the polymers during the cooling stage.

Polymer compositions in accordance with the present disclosure may address these issues by incorporating one or more activating agents that react with (activate) a polymer component in the mixture. Activation creates reactive sites on the polymer component that form crosslinks and branching structures that enhance the mechanical properties of the composition for material extrusion applications. For example, while low MW polymers may exhibit good chain diffusion and extrusion properties, the materials generate articles with poor mechanical performance during material extrusion processes. However, by activating polymer with an activating agent, chain extension and branching reactions improve the dimensional stability of the extruded material, and avoids or reduces the warpage and shrinkage characteristics of low MW polymers.

In one or more embodiments, polymer compositions may include an activating agent that is activated during an additive manufacturing process. Activating agents in accordance with the present disclosure include chemical activating agents and physical activating agents. Chemical activating agents include reagents that activate under manufacturing conditions, such as at elevated temperatures or pressures, and react with the polymer component of the composition directly or by the generation of reactive species such as free radicals. Examples of such chemical activating agents include, for example, coupling agents, crosslinking agents, free radical generators, and the like. Chemical activating agents may be "activated" by raising the temperature to or above a predetermined activation temperature that is dependent on the activating agent. The activated polymer composition is then deposited as a melt onto a surface or successive layer and the sequence is repeated until the printed article is complete.

To prevent activation or decomposition of the composition prior to use, polymer compositions may be combined with one or more activating agents at a temperature below the activation temperature. In addition, melt and extrusion steps may also be conducted at temperatures below the activation temperature to maintain acceptable levels of viscosity and chain diffusion. In FDM process, for example, the active component may be added in the extrusion process for the manufacture of the filament. When the filament is fed in the FDM printer, the liquefier temperature is set to (or above) the activation temperature and polymer activation occurs as the part is being printed. In freeform processes, the activating agent may be combined or coated with the polymer pellet feedstock or added to the extrusion process in which the polymer component is melted prior to the polymer dispensing step. Activation of the polymer composition then occurs as the extruded polymer melt is heated at the print head during deposition.

In one or more embodiments, the activating agent may be ionizing radiation from a radiation source that is used alone or in combination with one or more chemical activating agents to activate the polymer component of a polymer composition by generating free-radicals capable of initiating chain extension and/or crosslinking during extrusion manufacturing of an article. Methods utilizing ionizing radiation as the activating agent may involve the exposure of a deposited molten polymer material to a radiation source such as a lamp or laser that activates the coupling agent and initiates the conversion of the printed polymer.

In one or more embodiments, processing of the polymer composition, including mixing, extrusion, and melting, may occur below the activation temperature for the given activating agent, at which little to no activation occurs. Residence time, temperature control, shear, and exposure to radiation may then be used to control the activation of the polymer composition before, during, or after deposition on a substrate or article.

In one or more embodiments, printed articles may be undergo additional processing in post-treatment to fully convert any reactive species such as free radicals or unreacted coupling agent. In some embodiments, a post-treatment stage may be employed at the completion of the printed article, or after the printing of each layer. Post-treatment may include treatment with additional chemical curing agents such as organosilanes. In addition, post-treatment may include the use of physical methods that heat or pulse printed articles for a period of time adequate to convert any remaining reactive species and enhance chain diffusion among printed particles and layers. Physical post-treatments may include secondary lasers, ceramic heaters, quartz heater, or ultrasonic apparatuses.

### Polymer Component

In one or more embodiments, polymer compositions may be prepared from a polyolefin polymer or copolymer that is reacted with an activating agent to introduce one or more branches or crosslinks. In some embodiments, the polyolefin component of the polymer composition may form a polymer matrix phase that surrounds other components such as a rubber internal phase and/or other additives. In some embodiments, the polymer component of a polymer composition may include a combination of one or more polymers or copolymers produced by blending pre- or post-polymerization in a reactor.

Polyolefins may include homopolymers, random copolymers, or multiphasic polymer compositions. Polyolefins include polymers and copolymers of C2 to C20 olefins such as ethylene, propylene, butene, pentene, hexene, heptene, octene, branched olefins, unsaturated olefins, and the like. Polyolefins in accordance with the present disclosure may include polyethylene, polyethylene copolymers containing one or more olefin comonomers, copolymers of ethylene and one or more C3-C20 alpha-olefins, high density polyethylene, medium density polyethylene, low density polyethylene, linear low density polyethylene, very low density polyethylene, ultra low density polyethylene, ultrahigh molecular weight polyethylene and polypropylenes such as polypropylene homopolymer, polypropylene copolymers containing one or more olefin comonomers, copolymers of propylene and ethylene or one or more C4-C20 alpha-olefins, heterophasic polypropylene, random polypropylene. The polymer composition may be a heterophasic polypropylene copolymer comprising a polypropylene matrix phase and a rubber phase, wherein the rubber phase is present in a range from 3 wt% to 70 wt% based on the total weight of the heterophasic polypropylene copolymer. The rubber phase may comprise ethylene in the range of 15 to 70 wt% based on the weight of the rubber. Polypropylenes in accordance with the present disclosure may be atactic or may have a stereoregularity that is isotactic or syndiotactic. The polymers compositions may also include polymers generated from petroleum-based monomers, biologically derived monomers, and post-consumer recycled polyolefins.

In one or more embodiments, polymer compositions may include a polypropylene polymer have a percent by weight (wt%) of a C2 to C20 polyolefin comonomer that ranges from a lower limit selected from 0.5, 1, or 5 wt%, to an upper limit selected from 2.5, 5, or 10 wt%, where any lower limit may be combined with any upper limit.

In addition to the polyolefins above, other polymer compositions that are reactive with activating agents in accordance with the present disclosure may be used. For example, polymer compositions may also include a polymer component prepared from other polymers and copolymers including halogenated polymers such as polyvinyl chloride, polyesters such as polylactic acid and polyglycolic acid, polyamides such as polyamide 12, polyamide 6, polyamide 8, polyamide 11, polyamide 66, and thermoplastics such as acrylonitrile butadiene styrene (ABS).

### Internal Rubber Phase

In one or more embodiments, polymer compositions in accordance with the present disclosure include multiphasic polymer compositions having an internal rubber phase dispersed in a polymer matrix phase. In some embodiments, polymer compositions may include polymer compositions classified as impact copolymers (ICP).

In one or more embodiments, rubbers suitable for use as an internal rubber phase include homopolymers and copolymers having one or more monomers. In some embodiments, rubbers may include including graft copolymers such as maleated ethylene-propylene copolymers, and terpolymers of ethylene and propylene with nonconjugated dienes such as 5-ethylidene-2-norbornene, 1,8 octadiene, 1,4 hexadiene cyclopentadiene, and the like. Other polymers may include low density polyethylene, ethylene propylene rubber, poly(ethylene-methyl acrylate), poly(ethylene-acrylate), ethylene propylene diene rubber (EPDM), vinyl silicone rubber (VMQ), fluorosilicone (FVMQ), nitrile rubber (NBR), acrylonitrile-butadiene-styrene (ABS), styrene butadiene rubber (SBR), styrene-ethylene rubber, styrenebutadiene-styrene block copolymers (SBS and SEBS), polybutadiene rubber (BR), styrene-isoprene-styrene block copolymers (SIS), partially hydrogenated acrylonitrile butadiene (HNBR), natural rubber (NR), synthetic polyisoprene rubber (IR), neoprene rubber (CR), polychloropropene, bromobutyl rubber, chlorobutyl rubber, polyurethane, elastomer polyolefins as ethylene-octene copolymer, and combinations thereof.

In some embodiments, the internal rubber phase may be an ethylene-propylene rubber (EPR), which may in include EPRs having one or more comonomers in addition to ethylene and propylene. Other comonomers may include, for example, α-olefins such as 1-butene, 1-pentene, 1-hexene, 1-heptene, 1-octene, 1-nonene, 1-decene, 1-undecene, 1-dodecene, and the like.

In one or more embodiments, polymer compositions may include a multiphasic polymer having a polymer matrix phase and internal rubber phase present at a percent by weight (wt%) of the branched polymer composition that ranges from a lower limit selected from any of 2, 3, 5, and 10 wt%, to an upper limit selected from any of 50, 60, 70, and 75 wt%, where any lower limit may be paired with any upper limit.

In one or more embodiments, polymer compositions may include a multiphasic polymer having an internal rubber phase prepared from ethylene and a C3 to C8 polyolefin comonomer, where the ethylene is present at a percent by weight (wt%) of the internal rubber phase that ranges from a lower limit selected from any of 5, 10, 15, and 20 wt%, to an upper limit selected from any of 50, 60, 70, and 75 wt%, where any lower limit may be paired with any upper limit.

### Chemical Activating Agents

In one or more embodiments, polymer compositions may include one or more chemical activating agents to form covalent intra- and inter-strand bonds between the chains of the polymer component of a polymer composition. Activating agents in accordance with the present disclosure may include chemical activating agents such as coupling agents, free-radical generators, and crosslinking agents that are combined with a polymer composition prior to activation during a ME process. In one or more embodiments, multiple types of activating agents may be used. For example, a combination of activating agents may be used, such as a coupling agent with a free radical generator, in some embodiments, and chemical activating agents may be combined with ionizing radiation in some embodiments.

In one or more embodiments, polyolefin compositions may be grafted with coupling agents or curing agents prior to use in an additive manufacturing technique that activate during melt and/or sintering steps. In some embodiments, stoichiometry or multiple orthogonal functional groups may be used to control the level of crosslinking between the coupling agent and the polyolefin to maintain favorable viscosity profiles. For example, a polyolefin may be copolymerized or grafted with a bifunctional coupling agent or curing agent having a first alkene functional group that covalently bonds to the polyolefin backbone, while a second functional group such as a silane group is activated in a subsequent powder based fusion process when exposed to moisture or elevated temperatures.

Polymer compositions in accordance with the present disclosure may be modified by one or more activating agents at any step of a material extrusion process by raising the temperature of the composition to or above the activation temperature. Activation may occur at any step, including during a melt process, during deposition onto a substrate, or after deposition.

In some embodiments, activating agents may have an activation temperature in a range having a lower limit selected from any of 150°C, 175°C, and 190°C, to an upper limit selected from any of 200°C, 250°C, and 300°C, where any lower limit may be paired with any upper limit. In some embodiments, activating agents in accordance may have an activation temperature is 190°C or greater; or in the range of 190°C to 250°C. However, while a number of temperature ranges are provided, activation temperatures may be more or less depending on the nature of the activating agent and the presence of catalysts or applied radiation sources.

In one or more embodiments, activating agents may be included at a percent by weight (wt%) of the polymer composition that ranges from a lower limit selected from any of 0.0001, 0.001, 0.1, and 1 wt%, to an upper limit selected from any of 2.5, 3, 5, 10, and 15 wt%, where any lower limit may be paired with any upper limit. However, while ranges are provided for chemical activating agents above, it is also envisioned that the concentration of the activating agent (or agents) may be more or less depending on the particular application and article design criteria.

### Coupling Agents

In one or more embodiments, polyolefin compositions may include one or more coupling agents that react with the polyolefin component to form one or more covalent intra- and inter-strand bonds between polymer chains. Coupling agents in accordance with the present disclosure include chemical compounds that contain at least two reactive groups that are capable of forming bonds with the backbone or sidechains of the constituent polymers in the branched polymer composition.

In one or more embodiments, coupling agents may include sulfonyl azides, polysulfonyl azides, phosphazene azides, diazo alkanes, formyl azides, azides, dienes, geminally-substituted methylene groups, polymeric coupling agents, metallocarbenes, peroxides, aminosilanes, silanes, acrylates, methacrylates, and alpha-beta unsaturated acids, and the like.

Polysulfonyl azides in accordance with the present disclosure may have the general formula of X-R-X wherein each X is SO₂N₃ and R is a carbon chain that may be saturated or unsaturated, cyclic or acyclic, aromatic or non-aromatic, may contain one or more heteroatoms including oxygen, nitrogen, sulfur, or silicon, and one or more additional azide functionalities. Suitable coupling agents may include an R that is aryl, alkyl, aryl alkaryl, arylalkyl silane, siloxane or heterocyclic, groups and other groups which are inert and separate the sulfonyl azide groups as described. In some embodiments, R may include at least one aryl group between the sulfonyl groups, most preferably at least two aryl groups (such as when R is 4,4' diphenylether or 4,4'-biphenyl).

Polysulfonyl azides may include 4,4'-oxydibenzenesulfonyl azide, naphthylene bis(sulfonyl azides), 1,5-pentane bis(sulfonyl azide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-bis(benzenesulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from about 2 to 5 sulfonyl azide groups per molecule, and mixtures thereof. In some embodiments, coupling agent may include bissulfonyl azide, polysulfonyl azides such as oxy-bis(4-sulfonylazidobenzene), 2,7-naphthalene bis(sulfonyl azido), 4,4'-bis(sulfonyl azido)biphenyl, 4,4'-oxybis(benzenesulfonyl azide) and bis(4-sulfonyl azidophenyl)methane, and mixtures thereof.

In one or more embodiments, coupling agents may include polymeric coupling agents. Polymeric coupling agents in accordance with the present disclosure may include polyolefins having reactive groups on the terminal ends and/or the backbone of the polyolefin chain. The polyolefin backbone may be linear or branched with two or more terminal ends, and reactive groups on the polymeric coupling agent may be the same or mixed. In one or more embodiments, polymeric coupling agents may have the general structure of R(X)ₙR', where R and R' are independently selected from reactive groups that may include peroxide, alkyl borane, halogen, thiol, amine, amide, aldehyde, alcohol, carboxylic acid, ester, isocyanate, silane, phosphorouscontaining group, dithioester, dithiocarbamate, dithiocarbonate, trithiocarbonate, alkoxyamine, aryl sulfonyl halide, aryl sulfonyl azide, phosphoryl azides, vinyl, alkyl vinyl, vinylidene, aryl vinyl, diene, alkyl azide, or derivatives thereof; (X) is a polyolefin having n number of olefin units, where the polyolefin may be linear or branched, saturated or unsaturated, and may contain one or more heteroatoms such as fluorine, chlorine, bromine, iodine, oxygen, sulfur, selenium, nitrogen, phosphorous, silicon, and boron; and n may be an integer in the range of 2 to 1000.

Any polyolefin may be used to prepare the modified polyolefin of the polymeric coupling agent. Polyolefins include polymers and copolymers prepared from linear or branched olefins having 2 to 20 carbon atoms. The polyolefin for preparing the polymeric coupling agent may be a homopolymer synthesized from a single olefin, or a copolymer synthesized from two or more olefins. For example, the polyolefin for preparing the polymeric coupling agent may be polyethylene; polypropylene; and copolymers of ethylene and propylene.

### Crosslinking Agents

In one or more embodiments, activating agents may include crosslinking agents, which are bifunctional species having functional groups that may react with a polymer component of a polymer composition to form one or more intra- or inter-strand bonds with the backbone of the polymer component. Functional groups may include functionalities such as vinyl, ally, acrylic, methacrylic, sulfur, thiol, Michael acceptors, and mixtures thereof. Crosslinking agents in accordance with the present disclosure may include divinylbenzene, diethylene glycol dimethacrylate, diallyl maleate, unsaturated esters and ethers of pentaerythritol, triallyl cyanurate, sulfur, sulfur donors such as thiourea and derivatives of thiourea, p-benzoquinone, hydroquinone, bisphenol, and the like. In some embodiments, crosslinking agents in accordance with the present disclosure may include divinylbenzene, diethylene glycol dimethacrylate, diallyl maleate, unsaturated esters and ethers of pentaerythritol, triallyl cyanurate, sulfur, sulfur donors (thiourea and derivatives of thiourea), p-benzoquinone, hydroquinone and bisphenol.

### Free Radical Generators

In one or more embodiments, activating agents may include one or more or more free radical generators capable of producing radicals that react with the polymer component of a polymer composition, creating branching and crosslinking in the polymer structure. Free radical generators in accordance with the present disclosure may include one or more peroxides capable of generating free radicals during the polymer processing to promote curing. Peroxides may include dicumyl peroxide (DCP), t-butyl α-cumyl peroxide (BCP), di-t-amyl peroxide (DTAP), α,α'-di(t-butyl-peroxy)-1,3- and 1,4-di-isopropyl-benzene (DTBPIB), 2,5-di(t-butylperoxy)-2,5-dimethylhexane (DTBPH), di-t-butyl peroxide (DTBP), and 2,5-di(t-butylperoxy)-2,5-dimethylhexyne (DTBHY).

Other peroxides may include benzoyl peroxide, di-tert-butyl peroxide, tert-butyl cumyl peroxide, tert-butyl 3,5,5-trimethylhexanoate peroxide, tert-butyl peroxybenzoate, 2-ethylhexyl carbonate tert-butyl peroxide, 2,5-dimethyl-2,5-di (tert-butylperoxide) hexane, 1,1-di(tert-butylperoxide)-3,3,5-trimethylcyclohexane,2,5-dimethyl-2,5-di(tertbutylperoxide), hexyne-3,3,3,5,7,7-pentamethyl-1,2,4-trioxepane, butyl 4,4-di (tert-butylperoxide) valerate, di (2,4-dichlorobenzoyl) peroxide, di(4-methylbenzoyl) peroxide, peroxide di(tertbutylperoxyisopropyl) benzene, 2,5-di(cumylperoxy)-2,5-dimethyl hexane, 2,5-di(cumylperoxy)-2,5-dimethyl hexyne-3,4-methyl-4-(t-butylperoxy)-2-pentanol, 4-methyl-4-(t-amylperoxy)-2-pentanol,4-methyl-4-(cumylperoxy)-2-pentanol, 4-methyl-4-(t-butylperoxy)-2-pentanone, 4-methyl-4-(t-amylperoxy)-2-pentanone, 4-methyl-4-(cumylperoxy)-2-pentanone, 2,5-dimethyl-2,5-di(t-butylperoxy)hexane, 2,5-dimethyl-2,5-di(t-amylperoxy)hexane, 2,5-dimethyl-2,5-di(t-butylperoxy)hexyne-3, 2,5-dimethyl-2,5-di(t-amylperoxy)hexyne-3, 2,5-dimethyl-2-t-butylperoxy-5-hydroperoxyhexane, 2,5-dimethyl-2-cumylperoxy-5-hydroperoxy hexane, 2,5-dimethyl-2-t-amylperoxy-5-hydroperoxyhexane, m/p-alpha, alpha-di[(t-butylperoxy)isopropyl]benzene, 1,3,5-tris(t-butylperoxyisopropyl)benzene, 1,3,5-tris(t-amylperoxyisopropyl)benzene, 1,3,5-tris(cumylperoxyisopropyl)benzene, di[1,3-dimethyl-3-(t-butylperoxy)butyl]carbonate, di[1,3-dimethyl-3-(t-amylperoxy )butyl]carbonate, di[1,3-dimethyl-3-(cumylperoxy)butyl ]carbonate, di-t-amyl peroxide, t-amyl cumyl peroxide, t-butyl-isopropenylcumyl peroxide, 2,4,6-tri(butylperoxy)-s-triazine, 1,3,5-tri[l-(t-butylperoxy)-1-methylethyl]benzene, 1,3,5-tri-[(t-butylperoxy)-isopropyl]benzene, 1,3-dimethyl-3-(t-butylperoxy)butanol, 1,3-dimethyl-3-(t-amylperoxy)butanol, di(2-phenoxyethyl)peroxydicarbonate, di(4-t-butylcyclohexyl)peroxydicarbonate, dimyristyl peroxydicarbonate, dibenzyl peroxydicarbonate, di(isobomyl)peroxydicarbonate, 3-cumylperoxy-1,3-dimethylbutyl methacrylate, 3-t-butylperoxy-1,3-dimethylbutyl methacrylate, 3-t-amylperoxy-1,3-dimethylbutyl methacrylate, tri(l,3-dimethyl-3-t-butylperoxy butyloxy)vinyl silane, 1,3-dimethyl-3-(t-butylperoxy)butyl N-[1-{3-(1-methylethenyl)-phenyl)1-methylethyl]carbamate, 1,3-dimethyl-3-(t-amylperoxy)butyl N-[1- { 3(1-methylethenyl)-phenyl}-1-methylethyl]carbamate, 1,3-dimethyl-3-(cumylperoxy))butyl N-[1-{3-(1-methylethenyl)-phenyl}-1-methylethyl]carbamate, 1,1-di(t-butylperoxy)-3,3,5-trimethylcyclohexane, 1,1-di(t-butylperoxy)cyclohexane, n-butyl 4,4-di(t-amylperoxy)valerate, ethyl 3,3-di(t-butylperoxy)butyrate, 2,2-di(t-amylperoxy)propane, 3,6,6,9,9-pentamethyl-3-ethoxycabonylmethyl-1,2,4,5-tetraoxacyclononane, n-buty1-4,4-bis(t-butylperoxy)valerate, ethyl-3,3-di(t-amylperoxy)butyrate, benzoyl peroxide, OO-t-butyl-O-hydrogen-monoperoxy-succinate, OO-t-amyl-O-hydrogen-monoperoxy-succinate, 3,6,9, triethyl-3,6,9-trimethyl-l,4,7-triperoxynonane (or methyl ethyl ketone peroxide cyclic trimer), methyl ethyl ketone peroxide cyclic dimer, 3,3,6,6,9,9-hexamethyl-1,2,4,5-tetraoxacyclononane, 2,5-dimethyl-2,5-di(benzoylperoxy)hexane, t-butyl perbenzoate, t-butylperoxy acetate,t-butylperoxy-2-ethyl hexanoate, t-amyl perbenzoate, t-amyl peroxy acetate, t-butyl peroxy isobutyrate, 3-hydroxy-1,1-dimethyl t-butyl peroxy-2-ethyl hexanoate, OO-t-amyl-O-hydrogen-monoperoxy succinate, OO-t-butyl-O-hydrogen-monoperoxy succinate, di-t-butyl diperoxyphthalate, t-butylperoxy (3,3,5-trimethylhexanoate), 1,4-bis(t-butylperoxycarbo )cyclohexane, t-butylperoxy-3,5,5-trimethylhexanoate, t-butylperoxy-(cis-3-carboxy)propionate, allyl 3-methyl-3-t-butylperoxy butyrate, OO-t-butyl-O-isopropylmonoperoxy carbonate, OO-t-butyl-O-(2-ethyl hexyl)monoperoxy carbonate, 1,1,1-tris[2-(t-butylperoxy-carbonyloxy)ethoxymethyl]propane, 1,1,1-tris[2-(t-amylperoxy-carbonyloxy)ethoxymethyl]propane, 1,1,1-tris[2-(cumylperoxy-cabonyloxy)ethoxymethyl]propane, OO-t-amyl-O-isopropylmonoperoxy carbonate, di(4-methylbenzoyl)peroxide, di(3-methylbenzoyl)peroxide, di(2-methylbenzoyl)peroxide, didecanoyl peroxide, dilauroyl peroxide, 2,4-dibromo-benzoyl peroxide, succinic acid peroxide, dibenzoyl peroxide, di(2,4-dichloro-benzoyl)peroxide, dicetylperoxide dicarbonate, and combinations thereof. Peroxides may also include azo-peroxide initiators that include mixtures of peroxide with azodinitrile compounds such as 2,2'-azobis(2-methyl-pentanenitrile), 2,2'-azobis(2-methyl-butanenitrile), 2,2'-azobis(2-ethyl-pentanenitrile), 2-[(1-cyano-1-methylpropyl)azo]-2-methyl-pentanenitrile, 2-[(1-cyano-1-ethylpropyl)azo]-2-methyl-butanenitrile, 2-[(1-cyano-1-methylpropyl)azo]-2-ethyl, and the like.

Regarding the reactions among the radicals produced by free radical generators, macroradicals formed by the reaction of a polymer with a free radical in an activated polymer composition may undergo competing crosslinking and chain scission reactions. For example, polyethylene macroradicals may have a higher probability of cross-linking while the ones formed by polypropylene have a higher probability of chain scission. Differences in reactivity are often due to the fact that polymers such as polypropylene generate tertiary-carbon-centered radicals which are more stable than the secondary-carbon-centered radicals are formed in polymers such as polypropylene. However, in ethylene-propylene copolymers with higher ethylene contents the cross-linking reaction of the polypropylene radicals increases in relation to the chain scission reaction. In some embodiments, crosslinking of tertiary-carbon-centered polymers such as polypropylene with a free radical source may be controlled or modified by adjusting peroxide concentration or temperature. For example, crosslinking in polypropylene by peroxide-generated radicals may be achieved by using high peroxide concentrations and low reaction temperatures that minimize chain scission reactions.

### Physical Activating Agents - Ionizing Radiation

Methods in accordance with the present disclosure may incorporate one or more radiation sources to generate ionizing radiation at intensities that induce heating in polymer compositions. In some embodiments, radiation sources may have variable intensity that may span from an intensity suitable to initiate melting of a polyolefin composition to an intensity suitable to heat the polyolefin composition to or above the activation temperature of the coupling agent.

Radiation sources may include sources used in commercial additive manufacturing applications and include lamps and lasers that operate in across spectra such as infrared (IR), ultraviolet (UV), gamma, and xray, electron beams, and the like. In one or more embodiments, radiation sources may be focused on a polyolefin composition during melting and/or sintering, and the radiation source may be stationary or mobile.

### Curing Agents

Polymer compositions in accordance with the present disclosure may undergo a post-treatment with one or more curing agents following activation and deposition during a material extrusion process. Curing agents in accordance with the present disclosure may include organosilane containing functional groups that may react with the polymer composition including vinyl groups, epoxys, acryloxys, methacryloxys, amino groups, ureides, mercapto groups, isocyanates, isocyanurate, and the like. In one or more embodiments, may include unsaturated organosilanes such as vinyl triethoxysilane, vinyl-tris-(beta-methoxyethoxy)silane, methacryloylpropyltrimethoxysilane, gamma-amino-propyl triethoxysilane, 3-thiocyanatopropyl-triethoxy silane, gamma-mercaptopropyltrimethoxysilane, and the like.

In one or more embodiments, unsaturated organosilanes may be grafted to the polymer component of a polymer composition. When the grafted polymer is exposed to ambient humidity or aqueous fluids in a curing step, hydrolysis of the grafted silane groups produces reactive silanes that condense and produce siloxane crosslinks in the cured polymer.

In one or more embodiments, curing agents may be included at a percent by weight (wt%) of the polymer composition that ranges from a lower limit selected from any of 0.0001, 0.001, 0.1, and 1 wt%, to an upper limit selected from any of 2.5, 3, 5 and 10 wt%, where any lower limit may be paired with any upper limit.

### Additives

Polymeric compositions in accordance with the present disclosure may include additives that modify various physical and chemical properties when added to the polymeric composition during blending that include one or more polymer additives such as flow lubricants, antistatic agents, clarifying agents, nucleating agents, betanucleating agents, slippage agents, antioxidants, antacids, light stabilizers such as HALS, IR absorbers, silica, titanium dioxide, silicon dioxide, organic dyes, organic pigments, inorganic dyes, and inorganic pigments.

### Physical Properties

In one or more embodiments, polyethylene compositions, prior to reaction with a coupling agent, may have an initial melt flow index (MFI) at 190 °C and 2.16 kg as determined according to ASTM D1238 in a range having a lower limit selected from any of 1 g/10min, 5 g/lOmin, 10 g/lOmin, and 15 g/lOmin, to an upper limit selected from any of 50 g/lOmin, 100 g/lOmin, 500 g/lOmin, and 600 g/lOmin, where any lower limit may be paired with any upper limit. In one or more embodiments, polypropylene compositions, prior to reaction with a coupling agent, may have an initial melt flow index (MFI) at 230 °C and 2.16 kg as determined according to ASTM D1238 in a range having a lower limit selected from any of 1 g/lOmin, 5 g/lOmin, 10 g/lOmin, and 15 g/lOmin, to an upper limit selected from any of 100 g/lOmin, 500 g/lOmin, 600 g/lOmin, and 700 g/10min where any lower limit may be paired with any upper limit.

In one or more embodiments, polyethylene compositions prepared from a reaction with a coupling agent may have a final melt flow index (MFI) at 190 °C and 2.16 kg as determined according to ASTM D1238 in a range having a lower limit selected from any of 0.1 g/lOmin, 0.2 g/lOmin, 0.5 g/lOmin, and 1 g/lOmin, to an upper limit selected from any of 5 g/lOmin, 10 g/lOmin, 20 g/lOmin, and 50 g/10min, where any lower limit may be paired with any upper limit. In one or more embodiments, polypropylene compositions prepared from a reaction with a coupling agent may have a final melt flow index (MFI) at 230 °C and 2.16 kg as determined according to ASTM D1238 in a range having a lower limit selected from any of 0.2 g/lOmin, 0.5 g/lOmin, 1 g/lOmin, and 2g/10min to an upper limit selected from any of 10 g/lOmin, 20 g/lOmin, 50 g/lOmin, and 60 g/10min where any lower limit may be paired with any upper limit.

In one or more embodiments, the initial intrinsic viscosity (measured at 135°C, with decahydrinaftalene solvente (or decaline)) of polymers in accordance the present disclosure prior to reaction with a coupling agent may be in a range having a lower limit selected from 3 dL/g, 5 dL/g, and 10 dL/g, to an upper limit selected from 15 dL/g, 20 dL/g, 40 dL/g, and 50 dL/g, where any lower limit may be paired with any upper limit.

In one or more embodiments, polymer compositions may exhibit a final density following a reaction with a coupling agent determined according to ASTM D792 in a range having a lower limit selected from any of 0.9 g/cm³, 0.91 g/cm³, and 0.92 g/cm³, to an upper limit selected from any of 0.95 g/cm³, 0.97 g/cm³, and 0.98 g/cm³, where any lower limit may be paired with any upper limit.

### Applications

Methods in accordance with the present disclosure may be used in a number of additive manufacturing techniques, including FDM and freeform deposition. Additive manufacturing systems in accordance with the present disclosure, include any system that prints, builds, or otherwise produces 3D parts and/or support structures. Additive manufacturing systems may be a stand-alone unit, a sub-unit of a larger system or production line, and/or may include other non-additive manufacturing features, such as subtractive-manufacturing features, pick-and-place features, two-dimensional printing features, and the like

Articles that may be formed, include, for example, packaging, rigid and flexible containers, household appliances, molded articles such as caps, bottles, cups, pouches, labels, pipes, tanks, drums, water tanks, medical devices, shelving units, and the like. Specifically, any article conventionally made from the polymer compositions of the present disclosure (using conventional manufacturing techniques) may instead be manufactured from additive manufacturing.

The use of polymer compositions in accordance with the present disclosure may provide greater flexibility in the products produced by the additive manufacturing methods. Specifically, for example, the articles produced by additive manufacturing may have a lower flexural modulus and excellent fatigue resistance as compared to PLA or ABS.

### Examples

### Example 1

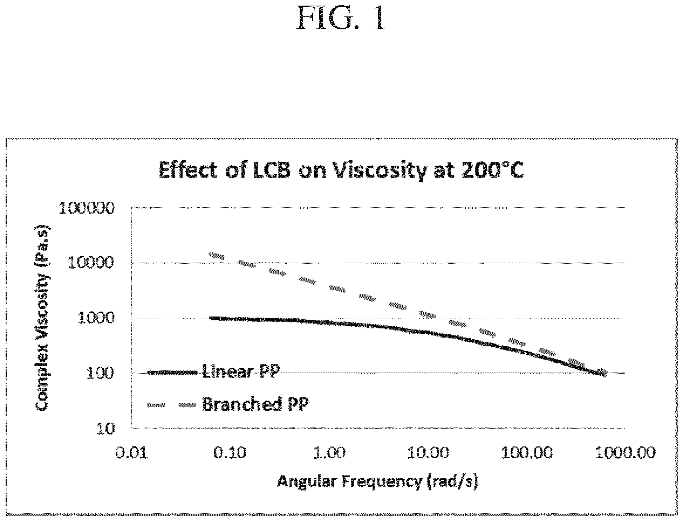

In the following examples, a linear polypropylene is combined with a bissulfonyl azide 4,4'-oxydibenzenesulfonylazide at 200°C to produce a branched polypropylene composition and assayed for various physical properties. With particular respect to FIG. 1, the effect of long chain branching on the viscosity at 200°C for a linear polypropylene and a branched polypropylene generated by the reaction of a polymer with a coupling agent is shown in a graph of complex viscosity as a function of angular frequency. It is noted that the viscosity of the branched polypropylene is higher relative to the linear polymer, particularly at lower angular velocities.

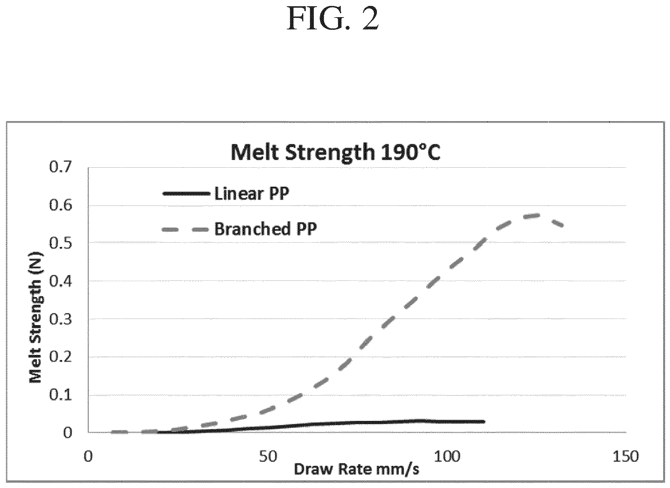

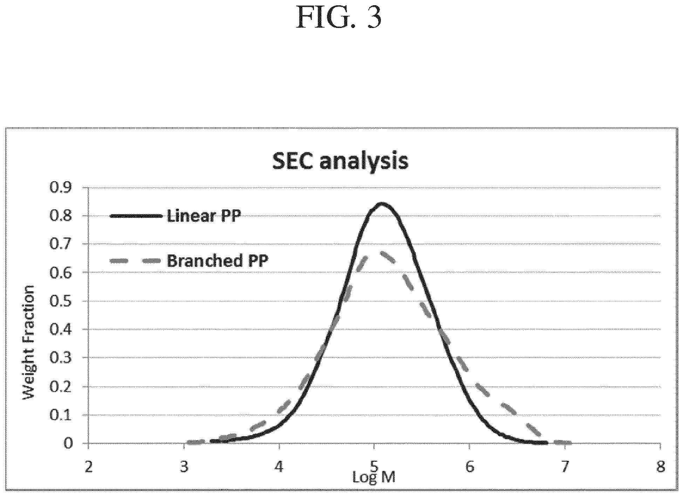

With particular respect to FIG. 2, the melt strength at 190°C was compared as a function of draw rate for a linear polypropylene and the corresponding polymer reacted with bissulfonyl azide, which highlights the increase in melt strength with increasing branching. Size exclusion chromatography (SEC) was also performed on samples of the linear and branched polymer to study the effect of coupling on the molecular weight of the polymers. With particular respect to FIG. 3, a graph of the weight fraction of the polymer samples as a function of the log of the molecular weight (log M) is shown for a linear and branched polypropylene. The broadening of the distribution of the branched polypropylene confirms the formation of high molecular weight polymer formations, which contribute to the observed increase in mechanical properties.

### Example 2

In the following example, a heterophasic polypropylene copolymer (PP1) is combined with two different activating agents. Sample PP1 X01 is combined with 0.2 wt% of bissulfonyl azide and sample PP1 X02 is combined with 10 wt% of Dymalink 9200, a zinc salt commercially available from Cray Valley^{™}. Samples PP1 X01 and PP1 X02 also contain 1,000 ppm of HPN20E, a nucleating agent commercially available from Milliken^{™}. Both samples PP1 X01 and PP1 X02 were prepared in conditions wherein it was possible to maintain viability of the respective activating agents.

| Table 1: Formulation and characterization for samples in Example 2 | | | | | | | | | | |
|---|---|---|---|---|---|---|---|---|---|---|
| | Formulation | Shrinkage low dir. (%) | Shrinkage normal to flow dir. (%) | CLTE at 100°C (µm/m °C) | MFR (230 °C/2.16 kg) | Contact Angle (°) | Tc (°C) | Tm2 (°C) | Xc (%) | Kinectics (min)* |
| PP1 | Base resin | 1.42 | 1.22 | 151 | 8.7 | 99 | 100/129 | 119/166 | 44 | 3.53 |
| PP1 | Base resin combined with 1000 ppm of HPN20E + 0.2 wt.% BSA | 1.47 | 1.21 | 125 | 6.8 | 97 | 130 | 119/166 | 44 | 315 |
| X01 | | | | | | | | | | |
| PP1 | Base resin combined with 1000 ppm of HPN20E^{∗} + 10 wt.% Dymalink 9200 | 1.28 | 1.3 | 105 | 2.65 | 100 | 99/124 | 116/150/164 | 38 | 12.2 |
| X02 | | | | | | | | | | |
| ^{∗} Kinetics represent the half time of the crystallization kinetics at 140 °C. | | | | | | | | | | |

### Example 3

In the next example, the behavior of resins formulated in accordance with the present disclosure was assayed in a 3D printing process. Sample PP X02 was tested using a pellet extrusion 3D printer (available from Titan Robotics^{™}). The printing processing temperatures are shown below in Table 2.

| Table 2: Printing Zone Temperatures for Example 3 | |
|---|---|
| Process Zone | Temperature °C |
| Zone 1 | 158 |
| Zone 2 | 210 |
| Zone 3 | 225 |
| Zone 4 | 225 |
| Bed | 80 |

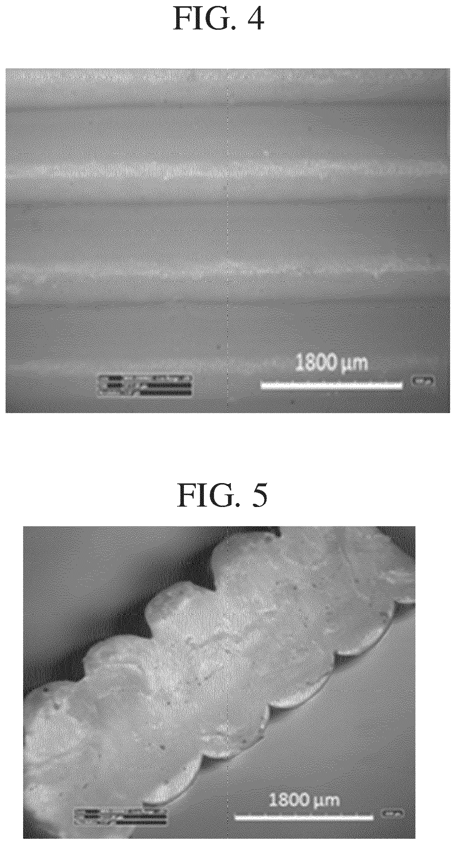

It was observed that reactive polymers, such as PP1 X02, may be used in 3D printing with pellet extrusion. During operation, the polymer resisted flow errors in the printer extruder and was used to generate printed specimens. It was also observed that reactive polymer PP1 X02 generated homogeneous layer deposition as seen in the microscopy images shown in FIG. 4, which is an image of the layer interface in the sample, and FIG. 5, which is an image of a layer cross-section.

### Example 4: Evaluation of mechanical properties

Sample formulations PP1 X01 and PP1 X02 were tested in a pellet extrusion 3D printer using the process conditions shown in Table 3.

| Table 3: Process Conditions for Example 4 | | |
|---|---|---|
| Sample | PP1 X01 | PP1 X02 |
| Nozzle Diameter | 1 mm | 1mm |
| Extrusion multiplier or flow rate | 1.32 | 1.12 |
| Primary layer height | 0.5 mm | 0.5 mm |
| Top solid layers | 10 | 10 |
| Bottom solid layers | 10 | 10 |
| Outline/Perimeter Shells | 1 | 1 |
| Skirt layers | 1 | 1 |
| Skirt outlines | 4 | 4 |
| Infill percentage | no | no |
| Outline overlap | 55% | 55% |
| Support | no | no |
| Bed temperature | 55C | 60C |
| Cooling (fan speed) | no | no |
| Default printing speed | 8000 mm/min | 8000 mm/min |
| Infill extrusion width | 1.3 | 1.3 |
| | | |
| Temperature 1 | 125 °C | 125 °C |
| Temperature 2 | 150 °C | 150 °C |
| Temperature 3 | 180 °C | 180 °C |
| Temperature 4 | 185 °C | 185 °C |
| Chamber temperature | off/closed | off/closed |

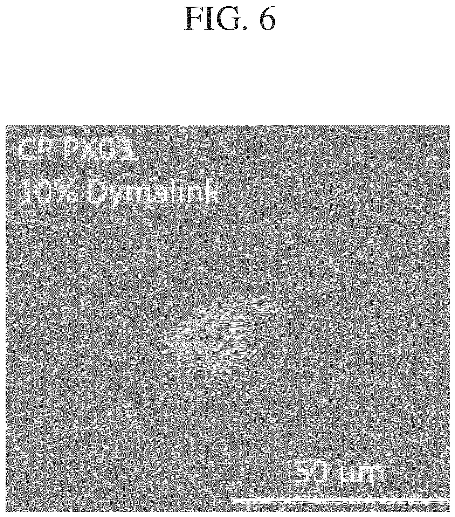

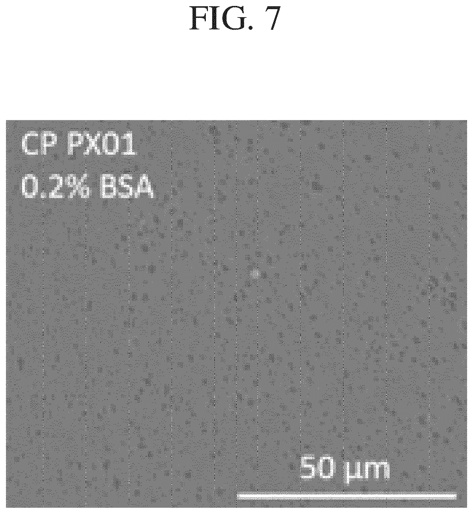

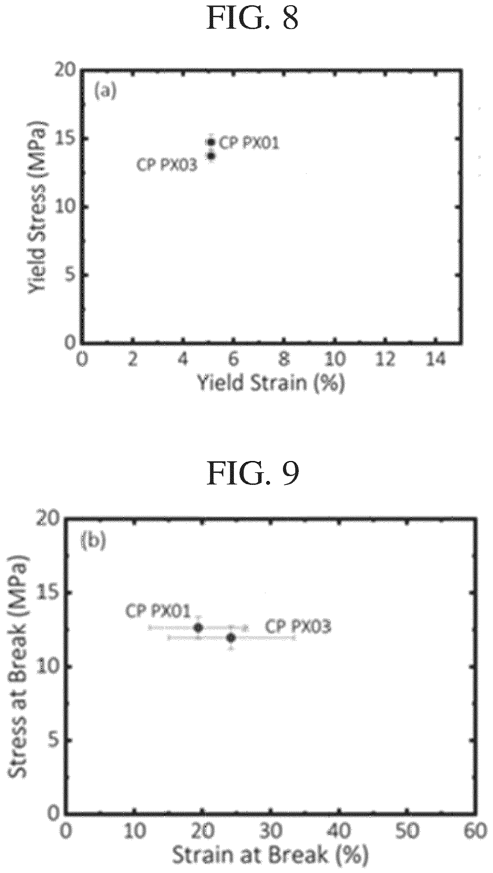

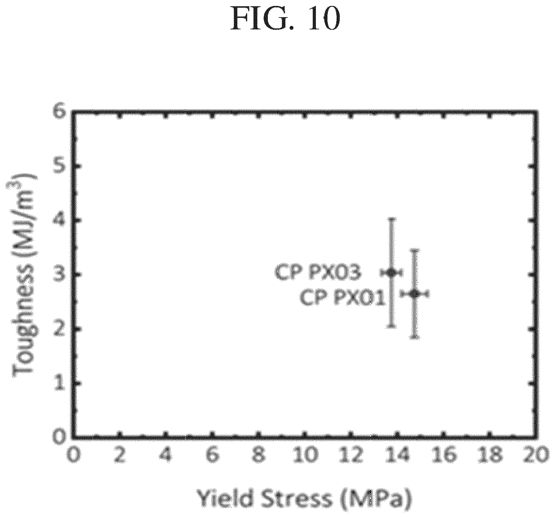

The generated specimens were then submitted to mechanical property analyses. Microscopy images obtained for each specimen are shown in FIGS. 6 and 7. The mechanical results for each sample are plotted in FIGS. 8-10, where FIG. 8 is a plot of the yield stress as a function of yield strain, FIG. 9 is a plot of stress break as a function of strain at break, and FIG. 10 is a plot of toughness as a function of yield stress.

Although the preceding description is described herein with reference to particular means, materials and embodiments, it is not intended to be limited to the particulars disclosed herein; rather, it extends to all functionally equivalent structures, methods and uses, such as are within the scope of the appended claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112(f) for any limitations of any of the claims herein, except for those in which the claim expressly uses the words 'means for' together with an associated function.

## Claims

1. A method of manufacturing an article using an additive manufacturing technique, comprising:
melting a polymer composition;
activating the polymer composition with one or more activating agents; and
depositing the molten polymer composition to manufacture the article,
wherein the polymer composition comprises at least one of polyethylene and a random polypropylene copolymer.

2. The method of claim 1, wherein the melting comprises extruding the polymer composition.

3. The method of claim 1 or 2, wherein melting the polymer composition and activating the polymer composition occur simultaneously.

4. The method of any of the above claims, wherein the melting and activating occur in a printhead of an additive manufacturing machine.

5. The method of claim 1 or 2, wherein depositing the molten polymer composition occurs prior to activating the polymer composition.

6. The method of claim 5, wherein the one or more activating agents comprises ionizing radiation emitted from a radiation source.

7. The method of claim 5, further comprising: pulsing a light on the deposited polymer composition, wherein the deposited polymer composition comprises the activating agent, and wherein the pulsed light activates the activating agent by increase in temperature.

8. The method of any of the above claims, further comprising preparing the polymer composition by combining a polymer with one or more activating agents selected from a group consisting of free-radical generators, coupling agents, and crosslinking agents, wherein combining the polymer with one or more activating agents occurs at a temperature below the activation temperature of the one or more activating agents, and wherein combining the polymer with one or more activating agents occurs prior to activating the polymer composition.

9. The method of claim 8, wherein activating the polymer composition comprises raising the temperature of the combined polymer composition and the one or more activating agents above the activation temperature of the one or more activating agents.

10. The method of claim 9, wherein the activation temperature is 190°C or greater.

11. The method of claim 9, wherein the activation temperature is in the range of 190°C to 250°C.

12. The method of any of the above claims, further comprising curing the deposited polymer composition with one or more curing agents.

13. The method of claim 12, wherein the curing agent is an unsaturated organosilane.

14. The method of any of the above claims, wherein the one or more activating agents are selected from a group consisting of azides, sulfonazides, peroxides, aminosilanes, silanes, acrylates, methacrylates, polymeric coupling agents, alpha-beta unsaturated acids, divinylbenzene, diethylene glycol dimethacrylate, diallyl maleate, unsaturated esters and ethers of pentaerythritol, triallyl cyanurate, sulfur, sulfur donors, p-benzoquinone, hydroquinone, and bisphenol.

15. The method of claim 14, wherein the one or more activating agents comprise one or more selected from a group consisting of dicumyl peroxide (DCP), t-butyl α-cumyl peroxide (BCP), di-t-amyl peroxide (DTAP), α,α'-di(t-butyl-peroxy)-1,3- and 1,4-di-isopropyl-benzene (DTBPIB), 2,5-di(t-butyl-peroxy)-2,5-dimethylhexane (DTBPH), di-t-butyl peroxide (DTBP), and 2,5-di(t-butylperoxy)-2,5-dimethylhexyne (DTBHY).

16. The method of claim 14, wherein the one or more activating agents is a bissulfonyl azide.

17. The method of claim 14, wherein the one or more activating agents are added at a percent by weight (wt%) of the polymer composition in the range of 0.0001 wt% to 15 wt%.

18. The method of any of the above claims, wherein the polymer composition is in a filament or pellet form.

19. The method of any of the above claims, wherein depositing the polymer composition comprises a filament deposition modeling technique.

20. The method of any of the above claims, wherein depositing the polymer composition comprises a freeform deposition technique.

21. The method of any of the above claims, further comprising building a three-dimensional article by repeating the sequence of steps of activating a polymer composition with one or more activating agents; melting the polymer composition; and depositing the molten polymer composition.

22. An article comprising:
a plurality of printed layers of a polyolefin composition, wherein the polyolefin composition is prepared from the deposition of an activated polyolefin composition, wherein the polyolefin composition is activated by one or more activating agents,
wherein the polyolefin composition comprises at least one of polyethylene and a random polypropylene copolymer.

23. The article of any one of claim 22, wherein the one or more activating agents are selected from a group consisting of free-radical generators, coupling agents, and crosslinking agents.

24. The article of claim 23, wherein the one or more activating agents comprise ionizing radiation emitted from a radiation source.

25. The article of claim 24, wherein the one or more activating agents further comprise an additional activating agent selected from a group consisting of free-radical generators, coupling agents, and crosslinking agents.

26. The article of claims 23 to 25, wherein the polyolefin composition is coupled with a bissulfonylazide.
